# FASCICULE DE BREVET EUROPEEN

(11) **EP 3 861 235 B1**
(45) Date de publication et mention de la délivrance du brevet: **14.02.2024**
(21) Numéro de dépôt: 19783226.4
(22) Date de dépôt: 23.09.2019
(51) Int. Cl.: F16H 63/30

(54) **DISPOSITIF ASSISTÉ PERFECTIONNÉ D'ENTRAÎNEMENT D'UNE FOURCHETTE DE PASSAGE DE RAPPORT D'UNE BOÎTE DE VITESSES**
VERBESSERTE UNTERSTÜTZTE VORRICHTUNG ZUM ANTRIEB EINER GETRIEBESCHALTGABEL
IMPROVED ASSISTED DEVICE FOR DRIVING A GEARBOX GEARSHIFT FORK

(30) Priorité: 05.10.2018 FR 1859258
(43) Date de publication de la demande: 11.08.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: GAILLIARD, Fabien, 92500 RUEIL-MALMAISON (FR)
(74) Mandataire: Renault Group
(86) Numéro de dépôt international: PCT/EP2019/075530
(87) Numéro de publication internationale: WO 2020/069900

(56) Documents cités:
- EP-A1- 3 006 786
- FR-A1- 3 075 301
- US-A1- 2002 139 215

## Description

### DOMAINE TECHNIQUE DE L'INVENTION

L'invention concerne la commande interne pour le changement de rapport dans une boîte de vitesses avec assistance au passage, aussi appelée aide au passage.

### ARRIERE PLAN TECHNIQUE DE L'INVENTION

L'invention concerne plus un dispositif de commande interne d'une boîte de vitesses comprenant une fourchette de boîte de vitesses et un axe de fourchette interne qui est entraîné en translation axiale sous le contrôle d'un organe externe de commande, en déplaçant une fourchette vers une position de rapport, ou vitesse, engagée.

L'invention trouve notamment à s'appliquer dans une boîte de vitesses comportant des ensembles moyeu/baladeur qui réalisent le crabotage des pignons sur leur arbre (par exemple en faisant appel à des crabots à front carré ou non), sans moyens de synchronisation mécanique, mais dans lesquels l'égalisation de régime de rotation des pignons et des arbres, préalable à leur accouplement, peut être confiée à des machines électriques et à des moteurs thermiques.

Le document FR-A1-2.988.800 décrit et représente un dispositif d'assistance au crabotage, dans lequel un dispositif dit propulseur, constitué principalement d'un ressort d'assistance, est intercalé axialement entre une fourchette solidaire de son axe de fourchette, et un crabot.

Dans le mode de réalisation décrit et représenté dans ce document, notamment à la figure 1, un ressort d'assistance 4 est monté comprimé axialement à l'intérieur du pontet 1, entre deux bagues 6 dont chacune est montée axialement entre une extrémité du ressort et un bras associé du pontet qui est traversé par l'axe de fourchette 2.

Chaque bague comporte une lumière oblongue d'orientation axiale dans laquelle est reçue une goupille radiale associée, portée par l'axe de fourchette.

La longueur de la lumière oblongue détermine la course d'assistance.

Le principe et le détail de fonctionnement d'un tel dispositif d'assistance sont décrits en détails dans ce document.

En position "relâchée" ou position de repos, le ressort est monté comprimé axialement et il sollicite en permanence chaque goupille axialement en appui contre une extrémité axiale de la lumière oblongue associée.

Le ressort d'assistance assure une précharge importante. Cela rend particulièrement difficile le montage de chacune des deux goupilles par introduction radiale dans un trou associé de l'axe de fourchette et à travers la lumière oblongue associée, notamment en vue d'une production industrielle fiable en grande série.

Le document EP3006786 A1 montre les caractéristiques techniques du préambule de la revendication 1. Le document US2002139215 A1 montre un autre dispositif d'entraînement dans l'état de la technique.

Pour faciliter ce montage des goupilles on a déjà proposé dans la demande de brevet français FR3075301 A1 une conception selon laquelle le dispositif comporte :
- un pontet sur lequel agit l'organe externe de commande pour l'entraîner en translation, qui comporte deux bras qui sont traversés par l'axe de fourchette, et qui peut coulisser le long de l'axe de fourchette,
- et un ressort d'assistance enroulé autour de l'axe de fourchette qui est comprimé par le déplacement axial du pontet en emmagasinant de l'énergie sur une première partie de la course d'engagement de l'axe de fourchette, et qui libère son énergie pour assister l'engagement d'un rapport sur une deuxième partie de la course d'engagement de l'axe de fourchette,
et dans lequel :
- le ressort d'assistance est monté comprimé axialement entre un bras du pontet et une butée liée axialement à l'axe de fourchette ;
- et le pontet est monté coulissant le long de l'axe de fourchette sur une course déterminée.

Le pontet comporte, agencée à l'extérieur du pontet, une lumière oblongue d'orientation axiale, et l'axe de fourchette porte une goupille radiale fixée sur l'axe de fourchette qui s'étend à travers la lumière oblongue dans laquelle elle est montée coulissante axialement pour limiter la course de coulissement du pontet le long de l'axe de fourchette en venant en butée contre une extrémité axiale associée de la lumière oblongue.

Dans cette conception, pour maitriser la course, la largeur angulaire de la lumière oblongue doit être plus grande que le diamètre de la goupille associée. Lorsque le pontet est contraint par l'action du ressort, cet écart de dimensions a tendance à faciliter un pivotement du pontet autour de l'axe de fourchette. Non maîtrisé, un tel phénomène peut aller d'une simple perte de rendement dans l'ensemble, à un risque de coincement.

Ainsi, cette même demande de brevet français propose que la goupille soit reçue angulairement sans jeu à l'intérieur de la lumière oblongue associée de manière à indexer angulairement le pontet par rapport à l'axe de fourchette.

Toutefois, la maîtrise dimensionnelle de la lumière oblongue et de la goupille, angulairement sans jeu, tout en permettant un montage aisé en grande série sont deux paramètres difficiles à concilier.

L'invention vise à proposer une nouvelle conception d'un tel dispositif de fourchette interne mettant en oeuvre le même principe d'assistance, mais qui facilite son montage et l'assemblage des différents composants sous charge.

### BREF RESUME DE L'INVENTION

L'invention propose un dispositif comprenant une fourchette de boîte de vitesses, un axe interne de fourchette et un dispositif assisté d'entraînement en translation axiale, sous le contrôle d'un organe externe de commande de passage, de la fourchette de boîte de vitesses fixée sur ledit axe interne de fourchette, qui comporte :
- un pontet sur lequel agit l'organe externe de commande pour l'entraîner en translation, qui comporte deux bras qui sont traversés par l'axe de fourchette, et qui est monté coulissant le long de l'axe de fourchette sur une course déterminée,
- et un ressort d'assistance enroulé autour de l'axe de fourchette qui est monté comprimé axialement entre un bras du pontet et une butée liée axialement à l'axe de fourchette de manière à être comprimé par le déplacement axial du pontet en emmagasinant de l'énergie sur une première partie de la course d'engagement de l'axe de fourchette, et à libérer son énergie pour assister l'engagement d'un rapport sur une deuxième partie de la course d'engagement de l'axe de fourchette,
et dans lequel :
- le pontet comporte, agencée à l'extérieur du pontet, une lumière oblongue d'orientation axiale ;
- et l'axe de fourchette porte une goupille radiale fixée sur l'axe de fourchette qui s'étend à travers la lumière oblongue dans laquelle elle est montée coulissante axialement et dans laquelle elle est reçue angulairement sans jeu de manière à indexer angulairement le pontet par rapport à l'axe de fourchette,
caractérisé en ce que l'axe de fourchette comporte, agencé à l'extérieur du pontet, un arrêt fixe pour limiter, dans un sens, la course de coulissement du pontet le long de l'axe de fourchette par appui axial du pontet contre cet arrêt fixe.

Selon d'autres caractéristiques du dispositif :
- le pontet comporte une bague qui est agencée à l'extérieur du pontet, qui est traversée axialement par l'axe de fourchette et dans laquelle est formée la lumière oblongue ;
- la lumière oblongue est ouverte axialement à l'opposé de celui des deux bras du pontet qui est adjacent à la bague ;
- la bague est réalisée en une seule pièce avec l'un des deux bras du pontet ;
- la bague comporte une autre lumière oblongue d'orientation axiale, qui est diamétralement opposée à ladite une lumière oblongue ;
- le dispositif comporte deux ressorts opposés d'assistance dont chacun est enroulé autour de l'axe de fourchette de manière à être comprimé par le déplacement axial du pontet dans un sens associé en emmagasinant de l'énergie sur une première partie de la course d'engagement de l'axe de fourchette, et à libérer son énergie pour assister l'engagement d'un rapport sur une deuxième partie de la course d'engagement de l'axe de fourchette, chaque ressort d'assistance est monté comprimé axialement entre un bras associé du pontet et une butée commune qui est liée axialement à l'axe de fourchette et qui est située axialement entre les deux ressorts d'assistance, et l'axe de fourchette comporte, agencé à l'extérieur du pontet un autre arrêt fixe pour limiter, dans l'autre sens, la course de coulissement du pontet le long de l'axe de fourchette par appui axial du pontet contre cette autre arrêt fixe ;
- l'arrêt fixe est un anneau d'arrêt traversé par l'axe de fourchette par rapport auquel il est immobilisé axialement ;
- la butée est un anneau de butée reçu dans une gorge radiale de l'axe de fourchette ;
- l'anneau de butée est un anneau élastique fendu ;
- une rondelle est interposée axialement entre la butée et une extrémité adjacente d'un ressort d'assistance.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective, selon un premier angle de vue, d'un exemple de réalisation d'un dispositif selon l'invention ;
- la figure 2 est une vue en perspective, selon un autre angle de vue, du dispositif représenté à la figure 1
- la figure 3 est une vue en coupe, par un plan passant par les axes de l'axe de fourchette et de la goupille, du dispositif illustré aux figures 1 et 2, sur laquelle le dispositif est illustré en position dite "relâchée" de l'assistance ;
- la figure 4 est une vue de détail selon la flèche F4 de la figure 3 ;
- la figure 5 est une vue analogue à celle de la figure 3 sur laquelle le dispositif est illustré en position dite "compressée" dans un sens de l'assistance ;
- les figures 6A à 6C sont trois vues en perspective qui illustrent trois étapes successives de montage et d'assemblage des différents composants du dispositif illustré aux figures 1 à 5.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale ou axiale en référence à l'axe géométrique "A" de l'axe de fourchette qui est orienté d'arrière vers l'avant en considérant les figures.

On a représenté aux figures un ensemble comportant un dispositif 10 d'entraînement axial, dans les deux sens, d'une fourchette 12 de passage de rapports d'une boîte de vitesses.

La conception générale connue d'une telle boîte de vitesses ne sera pas décrite ici en détail.

La fourchette 12 est traversée et est liée axialement à un axe, ou arbre, 14 d'entraînement axial dans les deux sens de la fourchette 12 qui est communément appelé axe de fourchette.

La fourchette 12 est rendue solidaire axialement de l'axe de fourchette 14 par tout moyen tel que par exemple ici par emmanchement à force.

L'axe de fourchette 14 est monté à coulissement axial à l'intérieur de la boîte de vitesses par l'intermédiaire de deux paliers arrière et avant (non représentés) qui sont agencés dans les parties complémentaires d'éléments de carter (non représentés) de la boîte de vitesses.

Le dispositif de commande 10 comporte un organe principal de commande 20, appelé pontet ou chariot, en forme générale d'un étrier qui comporte deux bras, arrière 22 et avant 24, d'orientation générale radiale, qui sont reliés entre eux par une branche axiale de liaison 26.

Le pontet 20 comporte aussi une branche de commande 28 qui s'étend transversalement à partir de la branche axiale de liaison 26 et sur laquelle, de manière connue, peut agir un organe de commande interne (non représenté) appartenant la boîte de vitesses afin d'actionner le pontet 20 axialement dans les deux sens selon l'axe A.

À l'intérieur, c'est-à-dire axialement entre ses bras arrière 22 et avant 24, le pontet 20 délimite un logement interne 29.

À l'extérieur, et ici axialement au-delà du bras avant 24, le pontet 20 comporte encore une bague 30 d'indexation angulaire sans jeu du pontet 20 par rapport à l'axe de fourchette 14.

Chaque bras 22, 24 du pontet 20 comporte un alésage axial 23, 25 respectivement qui sont alignés axialement et qui sont traversés par l'axe de fourchette 14 avec interposition d'une bague de glissement 32.

L'alésage avant 25 se prolonge axialement à travers la bague 30.

Le pontet 20 n'agit pas directement sur l'axe de fourchette 14 pour en provoquer des déplacements axiaux, mais il agit par l'intermédiaire d'un dispositif 34 d'assistance à ressorts.

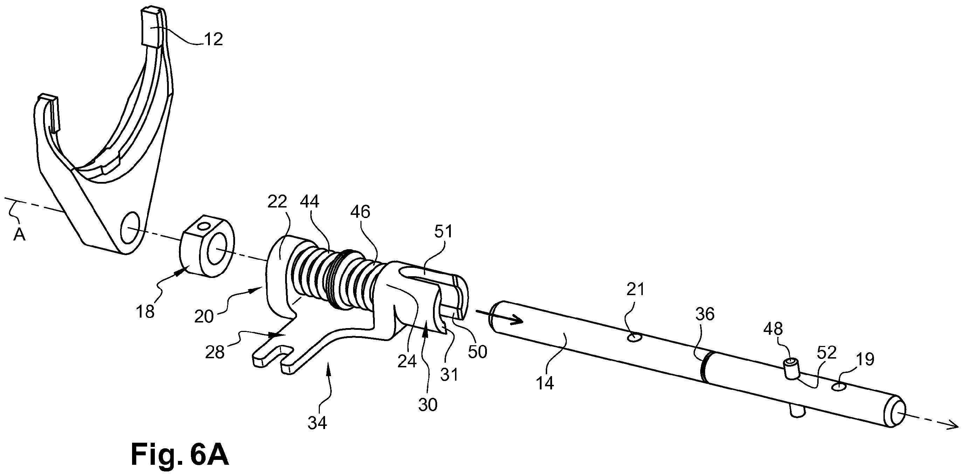

Comme on peut le voir notamment à la figure 6A, l'axe de fourchette 14 comporte une gorge radiale 36, dans laquelle est reçu et monté un anneau de butée axiale 38 qui est ici un anneau élastique fendu aussi appelé «circlips».

En position montée, l'anneau de butée 38 est situé axialement dans le logement 29 du pontet 20.

De part et d'autre de l'anneau de butée 38, il est prévu une rondelle de butée avant 42 et une rondelle de butée arrière 40.

Le dispositif d'assistance 34 comporte un ressort à boudin avant 46 est un ressort à boudin arrière 44 dont chacun est un ressort d'assistance qui est monté comprimé axialement.

En position de repos, ou position relâchée, du dispositif d'actionnement 10, et donc du pontet 20, le ressort d'assistance arrière 44 est interposé axialement entre la face interne du bras arrière 22 du pontet 20 et la rondelle arrière 40 qui est en appui axial vers l'avant contre l'anneau de butée 38.

De la même manière, le ressort d'assistance avant 46 est interposé axialement entre la face interne du bras avant 24 du pontet 20 et la rondelle avant 42 qui est en appui axial vers l'arrière contre l'anneau de butée 38.

Ainsi, toute action selon la direction axiale sur le pontet 20 par l'intermédiaire de sa branche de commande 28, est transmise à l'axe de fourchette 14 par l'intermédiaire de l'anneau de butée 38 et l'un ou l'autre des ressorts d'assistance avant 46 ou arrière 44 en fonction du sens axial de déplacement de la branche de commande 28.

Selon le principe connu illustré dans le document FR3075301 A1, afin de permettre d'assurer la fonction d'assistance par accumulation d'énergie par compression de l'un ou l'autre des ressorts d'assistance, puis la libération de l'énergie accumulée, les déplacements axiaux du pontet 20 par rapport à l'axe de fourchette 14 doivent être limités ici dans l'un et l'autre sens.

A cet effet, le dispositif 10 comporte un anneau d'arrêt fixe avant 16 et un anneau d'arrêt fixe arrière 18.

Chaque anneau d'arrêt fixe avant 16, arrière 18 est traversé axialement par l'axe de fourchette 14 par rapport auquel il est fixé axialement, ici par une goupille radiale de fixation avant 15, arrière 17 respectivement qui est montée radialement, ici à force, dans un perçage radial associé avant 19, arrière 21 de l'axe de fourchette 14.

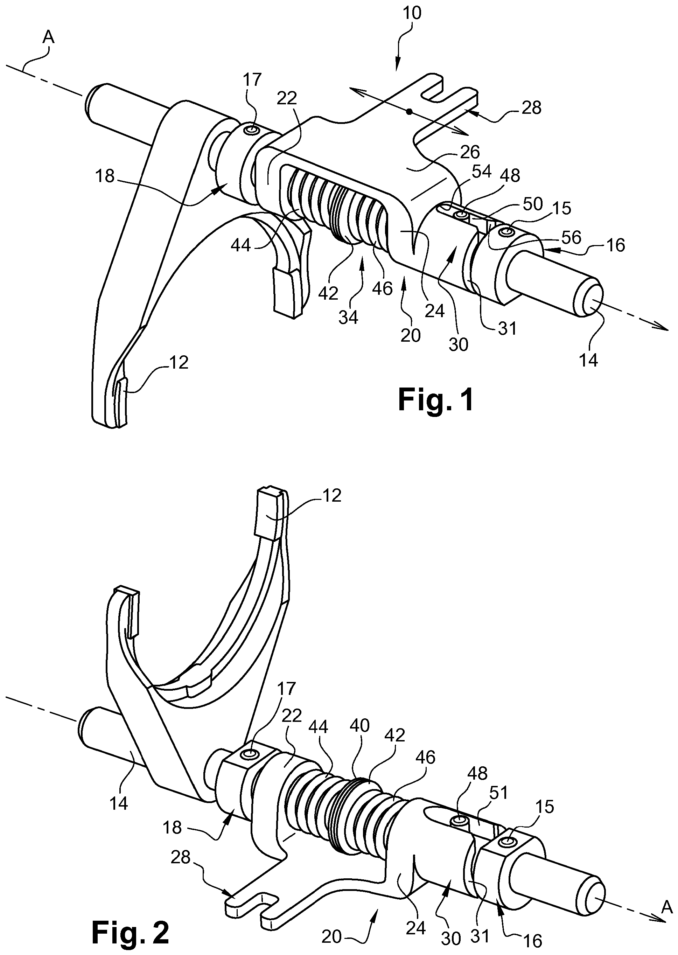

La position axiale des anneaux d'arrêt fixe avant 16 et arrière 18 et la longueur axiale hors tout du pontet 20 avec ici sa bague 30 sont telles que, dans la position de repos ou position relâchée illustrée aux figures 1 à 4, le pontet 20 est reçu avec un jeu axial « J » dans les deux sens entre les anneaux d'arrêt fixe avant 16 et arrière 18.

Ainsi, il existe un jeu axial entre la face transversale externe avant 31 de la bague 30 et la face transversale arrière de l'anneau d'arrêt fixe avant 16.

De même, il existe un jeu axial« J », par exemple de même valeur, entre la face transversale externe arrière 23 du bras arrière 22 et la face transversale avant de l'anneau d'arrêt fixe arrière 18.

La bague 30 d'indexation angulaire sans jeu du pontet 20 par rapport à l'axe de fourchette 14 coopère avec une goupille 48 qui s'étend radialement à travers une lumière oblongue 50 d'orientation axiale formée dans toute l'épaisseur radiale de la bague 30.

La goupille 48 est montée radialement, ici à force, dans un perçage radial 52 de l'axe de fourchette 14 qui est positionné axialement par rapport à la gorge 36 de telle manière que, quelle que soit la position axiale relative du pontet 20 - et donc de la bague 30 - par rapport à l'axe de fourchette 14 - et donc par rapport à la goupille 48 - le tronçon d'extrémité libre de la goupille 48 qui s'étend à l'intérieur de la lumière oblongue 50 soit reçu avec jeu selon la direction axiale et dans les deux sens.

La lumière oblongue 50 est d'orientation axiale et elle est délimitée par un bord d'extrémité arrière 54, tandis qu'elle est ouverte axialement vers l'avant à son extrémité avant 56.

Dans l'agencement illustré à titre non limitatif aux figures, en position relâchée qui est déterminée par l'équilibre des ressorts d'assistance 44 et 46, le tronçon d'extrémité libre de la goupille 48 est situé axialement sensiblement au centre à mi-longueur de la lumière oblongue 50.

De manière à permettre aisément le montage de la goupille 48 dans le perçage 52 et son introduction axiale à l'intérieur de la lumière oblongue 50, la bague 30 du pontet 20 comporte ici, symétriquement de manière diamétralement opposée à la lumière oblongue 50, une autre lumière oblongue 51 qui est aussi ouverte axialement vers l'avant et dont les dimensions sont au moins égales à celles de la lumière oblongue 50.

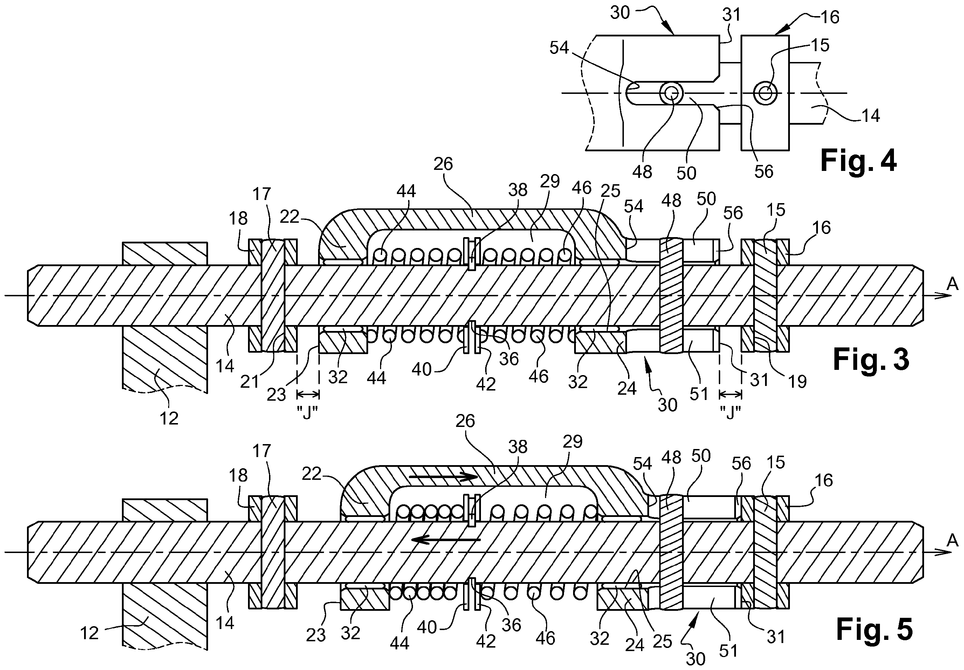

Comme on peut le voir en détail à la figure 4, le diamètre externe de la goupille 48 est sensiblement égal à la largeur transversale de la lumière oblongue 50. Ainsi, la goupille 48 est libre de se déplacer axialement à l'intérieur de la lumière oblongue 50, tandis qu'elle est reçue angulairement avec un jeu minimal réduit entre les flancs axiaux parallèles de la lumière oblongue 50.

En conséquence, la goupille 48 assure une indexation angulaire de la bague 30 - et donc du pontet 20 - par rapport à l'axe de fourchette 14, et donc par rapport à la fourchette 12.

En partant de la position relâchée illustrée à la figure 3, on a représenté à titre d'exemple à la figure 5 un déplacement relatif du pontet 20 (entraîné par sa branche d'actionnement 28) par rapport à l'axe de fourchette 14 selon une course maximale correspondant à la venue en butée axiale de la bague 30 contre l'anneau d'arrêt fixe avant 16.

Ce déplacement relatif provoque une compression axiale du ressort d'assistance arrière 44 entre le bras arrière 22 du pontet 20 et l'anneau de butée 36 avec accumulation d'énergie par ce ressort 44, tandis que le ressort avant 46 n'est ici plus comprimé axialement.

Lorsqu'intervient l'égalisation des régimes de rotation et l'alignement angulaire des dents du dispositif associé à crabot (non représenté), le ressort d'assistance comprimé 44 libère l'énergie d'assistance accumulée pour «projeter» l'axe de fourchette 14 axialement vers l'avant.

Le montage et l'assemblage des différents composants qui viennent d'être décrits s'effectuent de la manière suivante.

Comme on peut le voir à la figure 6A, un premier sous-ensemble constitué de l'axe de fourchette 14, avec sa gorge 36 et ses perçages 19, 21 et 52 est réalisé.

Puis ce premier sous-ensemble est complété par la mise en place de la goupille 48 d'indexation angulaire dans le perçage 52 de l'axe de fourchette 14.

Un second sous-ensemble est constitué par le dispositif d'assistance 34 constitué du pontet 20 avec les deux ressorts d'assistance 44, 46 qui sont montés comprimés axialement entre les bras arrière 22 et avant 24 avec interposition des deux rondelles 40 et 42.

Ces deux sous-ensembles sont illustrés dans cet état à la figure 6A, en association avec l'anneau d'arrêt fixe arrière 18 et la fourchette 12.

L'assemblage se poursuit en introduisant axialement, de l'avant vers l'arrière, l'axe de fourchette 14 à l'intérieur du dispositif d'assistance 34, puis à travers l'anneau d'arrêt fixe arrière 18, et enfin par exemple ici à force dans le perçage de la fourchette 12 selon une position axiale déterminée de la fourchette 12 le long de l'axe de fourchette 14.

Lors de cet assemblage axial, la goupille 48 est introduite axialement d'avant vers l'arrière à l'intérieur de la lumière oblongue 50, et en même temps dans l'autre lumière oblongue 51.

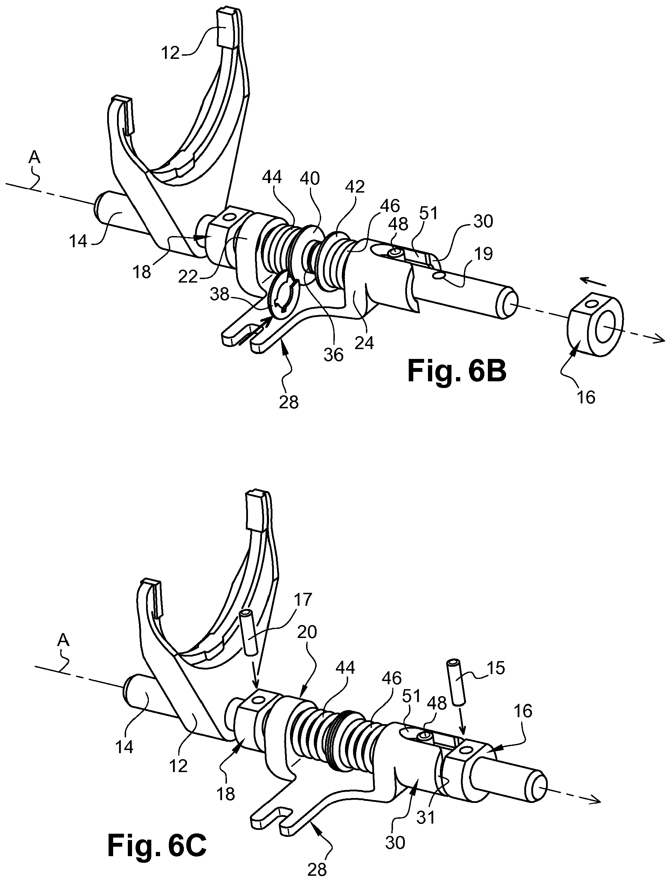

On aboutit ainsi à l'état illustré à la figure 6B dans lequel on écarte axialement l'une de l'autre les deux rondelles 40 et 42 pour mettre en place radialement l'anneau de butée 38 dans la gorge 36 de l'axe de fourchette 14.

On aboutit ainsi à l'état illustré à la figure 6C dans lequel le dispositif d'assistance 34 est dans son état relâché et équilibré axialement.

Il ne reste plus alors qu'à mettre en place l'anneau d'arrêt fixe avant 16 sur l'axe de fourchette 14, puis - comme illustré à la figure 6C - à fixer chaque anneau d'arrêt fixe 16, 18 au moyen de sa goupille associée 15, 17 montée à force dans son perçage associé 19, 21.

Ainsi, le montage et l'assemblage des composants est grandement facilité, notamment du fait que l'insertion radiale des goupilles 19, 21 et 48 est effectuée sans charge axiale.

Dans le cadre de la présente invention, la goupille radiale 48 fixée sur l'axe de fourchette 14 s'étend à travers la lumière oblongue 50 dans laquelle elle est montée coulissante axialement et dans laquelle elle est reçue angulairement « sans jeu », c'est-à-dire avec un jeu minimum et minimal permettant son coulissement axial à l'intérieur de la lumière oblongue 50, tout en permettant d'indexer angulairement le pontet 20 par rapport à l'axe de fourchette 14.

## Revendications

1. Dispositif comprenant une fourchette de boîte de vitesses (12), un axe interne (14) de fourchette et un dispositif (10) assisté d'entraînement en translation axiale, sous le contrôle d'un organe externe de commande de passage, de la fourchette (12) de boîte de vitesses fixée sur ledit axe interne (14) de fourchette, qui comporte :
- un pontet (20) sur lequel agit l'organe externe de commande pour l'entraîner en translation, qui comporte deux bras (22, 24) qui sont traversés par l'axe de fourchette (14), et qui est monté coulissant le long de l'axe de fourchette (14) sur une course déterminée,
- et un ressort (44, 46) d'assistance enroulé autour de l'axe de fourchette (14) qui est monté comprimé axialement entre un bras (22, 24) du pontet (20) et une butée (38) liée axialement à l'axe de fourchette (14), et dans lequel :
- le pontet (20) comporte, agencée à l'extérieur du pontet (20), une lumière oblongue (50) d'orientation axiale ;
- et l'axe de fourchette (14) porte une goupille radiale (48) fixée sur l'axe de fourchette (14) qui s'étend à travers la lumière oblongue (50) dans laquelle elle est montée coulissante axialement et dans laquelle elle est reçue angulairement sans jeu,
**caractérisé en ce que** l'axe de fourchette comporte, agencé à l'extérieur du pontet (20), un arrêt fixe (16, 18) pour limiter, dans un sens, la course de coulissement du pontet (20) le long de l'axe de fourchette (14) par appui axial du pontet (20) contre cet arrêt fixe (16, 18).

2. Dispositif selon la revendication 1, **caractérisé en ce que** le pontet (20) comporte une bague (30) qui est agencée à l'extérieur du pontet (20), qui est traversée axialement par l'axe de fourchette (14) et dans laquelle est formée la lumière oblongue (50).

3. Dispositif selon la revendication 2, **caractérisé en ce que** la lumière oblongue (50) est ouverte axialement à l'opposé de celui des deux bras (22, 24) du pontet (20) qui est adjacent à la bague (30).

4. Dispositif selon l'une des revendications 2 ou 3, **caractérisé en ce que** la bague (30) est réalisée en une seule pièce avec l'un (24) des deux bras (22, 24) du pontet (20).

5. Dispositif selon l'une quelconque des revendications 2 à 4, **caractérisé en ce que** la bague (30) comporte une autre lumière oblongue (51) d'orientation axiale, qui est diamétralement opposée à ladite une lumière oblongue (50).

6. Dispositif selon l'une quelconque des revendications précédentes, **caractérisé :**
- **en ce qu'**il comporte deux ressorts opposés d'assistance (44, 46) dont chacun est enroulé autour de l'axe de fourchette (14);
- **en ce que** chaque ressort d'assistance (44, 46) est monté comprimé axialement entre un bras (22, 24) associé du pontet (20) et une butée commune (38) qui est liée axialement à l'axe de fourchette (14) et qui est située axialement entre les deux ressorts d'assistance (44, 46) ;
- et **en ce que** l'axe de fourchette comporte, agencé à l'extérieur du pontet (20) un autre arrêt fixe (18, 16) pour limiter, dans l'autre sens, la course de coulissement du pontet (20) le long de l'axe de fourchette (14) par appui axial du pontet (20) contre cette autre arrêt fixe (18, 16).

7. Dispositif selon l'une quelconque des revendications précédentes, **caractérisé en ce que** l'arrêt fixe (16, 18) est un anneau d'arrêt traversé par l'axe de fourchette (14) par rapport auquel il est immobilisé axialement.

8. Dispositif selon l'une quelconque des revendications précédentes, **caractérisé en ce que** la butée est un anneau de butée (38) reçu dans une gorge radiale (36) de l'axe de fourchette (14).

9. Dispositif selon la revendication précédente, **caractérisé en ce que** l'anneau de butée (38) est un anneau élastique fendu.

10. Dispositif selon la revendication 1, **caractérisé en ce qu'**une rondelle (40, 42) est interposée axialement entre la butée (36) et une extrémité adjacente d'un ressort d'assistance (44, 46).

## Patentansprüche

1. Vorrichtung, welche eine Getriebeschaltgabel (12), eine innere Gabelachse (14) und eine unterstützte Vorrichtung (10) zum axialen translatorischen Antrieb, unter der Steuerung eines externen Schaltsteuerorgans, der auf der inneren Gabelachse (14) befestigten Getriebeschaltgabel (12) umfasst, welche aufweist:
- eine Brücke (20), auf die das externe Steuerorgan einwirkt, um sie translatorisch anzutreiben, die zwei Arme (22, 24) aufweist, die von der Gabelachse (14) durchquert werden, und die entlang der Gabelachse (14) über eine bestimmte Weglänge gleitend gelagert ist,
- und eine um die Gabelachse (14) gewickelte Unterstützungsfeder (44, 46), welche axial zusammengedrückt zwischen einem Arm (22, 24) der Brücke (20) und einem axial mit der Gabelachse (14) verbundenen Widerlager (38) angebracht ist, und wobei:
- die Brücke (20) ein außerhalb der Brücke (20) angeordnetes Langloch (50) mit axialer Ausrichtung aufweist;
- und die Gabelachse (14) einen auf der Gabelachse (14) befestigten radialen Stift (48) trägt, der sich durch das Langloch (50) hindurch erstreckt, in welchem er axial gleitend angebracht ist und in welchem er ohne Winkelspiel aufgenommen ist,
**dadurch gekennzeichnet, dass** die Gabelachse einen außerhalb der Brücke (20) angeordneten festen Anschlag (16, 18) aufweist, um den Gleitweg der Brücke (20) entlang der Gabelachse (14) durch axiale Anlage der Brücke (20) an diesem festen Anschlag (16, 18) in einer Richtung zu begrenzen.

2. Vorrichtung nach Anspruch 1, **dadurch gekennzeichnet, dass** die Brücke (20) eine Hülse (30) aufweist, die außerhalb der Brücke (20) angeordnet ist, die axial von der Gabelachse (14) durchquert wird und in der das Langloch (50) ausgebildet ist.

3. Vorrichtung nach Anspruch 2, **dadurch gekennzeichnet, dass** das Langloch (50) axial offen gegenüber demjenigen der zwei Arme (22, 24) der Brücke (20) ist, welcher der Hülse (30) benachbart ist.

4. Vorrichtung nach einem der Ansprüche 2 oder 3, **dadurch gekennzeichnet, dass** die Hülse (30) aus einem Stück mit dem einen (24) der zwei Arme (22, 24) der Brücke (20) hergestellt ist.

5. Vorrichtung nach einem der Ansprüche 2 bis 4, **dadurch gekennzeichnet, dass** die Hülse (30) ein weiteres Langloch (51) mit axialer Ausrichtung aufweist, welches dem einen Langloch (50) diametral gegenüberliegt.

6. Vorrichtung nach einem der vorhergehenden Ansprüche, **gekennzeichnet:**
- **dadurch, dass** sie zwei einander gegenüberliegende Unterstützungsfedern (44, 46) aufweist, die jeweils um die Gabelachse (14) gewickelt sind;
- dadurch, dass jede Unterstützungsfeder (44, 46) axial zusammengedrückt zwischen einem zugeordneten Arm (22, 24) der Brücke (20) und einem gemeinsamen Widerlager (38) angebracht ist, das axial mit der Gabelachse (14) verbunden ist und das sich axial zwischen den beiden Unterstützungsfedern (44, 46) befindet;
- und dadurch, dass die Gabelachse einen außerhalb der Brücke (20) angeordneten weiteren festen Anschlag (18, 16) aufweist, um den Gleitweg der Brücke (20) entlang der Gabelachse (14) durch axiale Anlage der Brücke (20) an diesem weiteren festen Anschlag (18, 16) in der anderen Richtung zu begrenzen.

7. Vorrichtung nach einem der vorhergehenden Ansprüche, **dadurch gekennzeichnet, dass** der feste Anschlag (16, 18) ein Anschlagring ist, der von der Gabelachse (14) durchquert wird, bezüglich der er axial fixiert ist.

8. Vorrichtung nach einem der vorhergehenden Ansprüche, **dadurch gekennzeichnet, dass** das Widerlager ein Widerlagerring (38) ist, der in einer radialen Nut (36) der Gabelachse (14) aufgenommen ist.

9. Vorrichtung nach dem vorhergehenden Anspruch, **dadurch gekennzeichnet, dass** der Widerlagerring (38) ein elastischer Spaltring ist.

10. Vorrichtung nach Anspruch 1, **dadurch gekennzeichnet, dass** eine Unterlegscheibe (40, 42) axial zwischen dem Widerlager (36) und einem benachbarten Ende einer Unterstützungsfeder (44, 46) angeordnet ist.

## Claims

1. Device comprising a gearbox fork (12), an internal fork shaft (14) and an assisted device (10) which, under the control of an external shift control member, axially translationally drives the gearbox fork (12) fastened to said internal fork shaft (14), which comprises
- a saddle (20) on which the external control member acts to drive it translationally, which comprises two arms (22, 24) which are traversed by the fork shaft (14), and which is mounted so as to slide along the fork shaft (14) over a predetermined travel,
- and an assistance spring (44, 46) wound around the fork shaft (14) and mounted so as to be compressed axially between an arm (22, 24) of the saddle (20) and an end stop (38) connected axially to the fork shaft (14), and wherein:
- the saddle (20) comprises, arranged outside the saddle (20), an oblong slot (50) of axial orientation;
- and the fork shaft (14) bears a radial pin (48) fastened to the fork shaft (14) and extending through the oblong slot (50) in which it is mounted so as to slide axially and in which it is received angularly without play,
**characterized in that** the fork shaft comprises, arranged outside the saddle (20), a fixed stop (16, 18) for limiting, in one direction, the sliding travel of the saddle (20) along the fork shaft (14) by the saddle (20) bearing axially against this fixed stop (16, 18).

2. Device according to Claim 1, **characterized in that** the saddle (20) comprises a ring (30) which is arranged outside the saddle (20), which is traversed axially by the fork shaft (14) and in which the oblong slot (50) is formed.

3. Device according to Claim 2, **characterized in that** the oblong slot (50) is open axially away from that one of the two arms (22, 24) of the saddle (20) which is adjacent to the ring (30).

4. Device according to either of Claims 2 and 3, **characterized in that** the ring (30) is made in one piece with one (24) of the two arms (22, 24) of the saddle (20) .

5. Device according to any one of Claims 2 to 4, **characterized in that** the ring (30) comprises another oblong slot (51) of axial orientation that is diametrically opposite said oblong slot (50).

6. Device according to any one of the preceding claims, **characterized:**
- **in that** it comprises two opposed assistance springs (44, 46), each of which is wound around the fork shaft (14) ;
- **in that** each assistance spring (44, 46) is mounted so as to be compressed axially between an associated arm (22, 24) of the saddle (20) and a common end stop (38) which is axially connected to the fork shaft (14) and which is situated axially between the two assistance springs (44, 46);
- and **in that** the fork shaft comprises, arranged outside the saddle (20), another fixed stop (18, 16) for limiting, in the other direction, the sliding travel of the saddle (20) along the fork shaft (14) by the saddle (20) bearing axially against this other fixed stop (18, 16) .

7. Device according to any one of the preceding claims, **characterized in that** the fixed stop (16, 18) is a stop ring traversed by the fork shaft (14) and in relation to which it is immobilized axially.

8. Device according to any one of the preceding claims, **characterized in that** the end stop is an end stop ring (38) received in a radial groove (36) of the fork shaft (14) .

9. Device according to the preceding claim, **characterized in that** the end stop ring (38) is a split elastic ring.

10. Device according to Claim 1, **characterized in that** a washer (40, 42) is interposed axially between the end stop (36) and an adjacent end of an assistance spring (44, 46).
